# FASCICULE DE BREVET EUROPEEN

(11) **EP 4 055 262 B1**
(45) Date de publication et mention de la délivrance du brevet: **03.01.2024**
(21) Numéro de dépôt: 20811704.4
(22) Date de dépôt: 02.11.2020
(51) Int. Cl.: F02K 9/97

(54) **DISPOSITIF DE PROTECTION THERMIQUE AMÉLIORÉ POUR TUYÈRE**
VERBESSERTE THERMISCHE SCHUTZVORRICHTUNG FÜR EINE DÜSE
IMPROVED THERMAL PROTECTION DEVICE FOR A NOZZLE

(30) Priorité: 04.11.2019 FR 1912335
(43) Date de publication de la demande: 14.09.2022
(73) Titulaire: ArianeGroup SAS, 78130 Les Mureaux (FR)
(72) Inventeur: PYRE, Alain, 27207 Vernon Cedex (FR)
(74) Mandataire: Cabinet Beau de Loménie
(86) Numéro de dépôt international: PCT/FR2020/051977
(87) Numéro de publication internationale: WO 2021/089935

(56) Documents cités:
- DE-T2- 3 686 220
- FR-A1- 3 060 062
- FR-A1- 3 072 426
- FR-A1- 3 074 539

## Description

### Domaine Technique

Le présent exposé concerne le domaine des lanceurs spatiaux, et plus précisément les tuyères de lanceurs spatiaux.

### Technique antérieure

Les lanceurs spatiaux présentent un moteur muni d'une tuyère, communément appelée divergent, qui guide le flux de fluide généré par le moteur.

Les tuyères doivent ainsi résister à la fois à des sollicitations thermiques et mécaniques. Toutefois, les contraintes spécifiques aux lanceurs spatiaux, notamment en termes d'encombrement, de masse et de coût, rendent particulièrement complexe l'obtention de propriétés permettant de répondre à ces sollicitations.

Des dispositifs connus notamment tels que présentés dans les documents FR3060062 et FR3074539 proposent d'employer des blocs isolant rigides qui sont positionnés autour de la tuyère. De tels dispositifs impliquant cependant des contraintes importantes pour la réalisation des blocs isolant, qui doivent être réalisés afin de correspondre parfaitement à la géométrie de la tuyère. La présente invention vise ainsi à proposer une structure isolante ne présentant pas de telles contraintes.

### Exposé de l'invention

Afin de répondre au moins partiellement à ces problématiques, le présent exposé concerne une tuyère d'un moteur d'engin spatial telle que définie dans la revendication 1, comprenant un corps de tuyère s'étendant selon une direction principale, depuis une extrémité proximale solidaire du moteur de l'engin spatial, et une extrémité distale libre,ledit corps de tuyère présentant une pluralité de raidisseurs s'étendant depuis une surface externe du corps de tuyère, radialement par rapport à la direction principale, ladite tuyère comprenant un système d'isolation thermique, comprenant au moins une bande de matériau isolant disposée de manière à entourer la surface externe du corps de tuyère sur au moins une partie de la hauteur dudit corps de tuyère, la hauteur étant mesurée selon la direction principale, ledit système d'isolation thermique comprenant une pluralité d'éléments de maintien, chaque élément de maintien étant positionné de manière à entourer lesdites bandes de matériau isolant, et étant disposé entre deux raidisseurs du corps de tuyère.

Selon un exemple, chaque élément de maintien comprend un câble associé à un système de mise en tension.

Selon un exemple, chaque élément de maintien comprend un revêtement réalisé en isolant thermique.

Selon un exemple, le système de mise en tension est un ridoir.

Selon un exemple, un élément de maintien est disposé dans chaque intervalle entre deux raidisseurs.

Selon un exemple, le système d'isolation thermique comprend au moins deux bandes de matériau isolant superposées.

Selon un exemple, le système d'isolation thermique comprend une pluralité de bandes de matériau isolant, chaque bande de matériau isolant étant positionnée de manière à recouvrir au moins partiellement les bandes de matériau isolant adjacentes.

Le présent exposé concerne également un engin spatial comprenant une tuyère telle que définie précédemment.

### Brève description des dessins

L'invention et ses avantages seront mieux compris à la lecture de la description détaillée faite ci-après de différents modes de réalisation de l'invention donnés à titre d'exemples non limitatifs.
[Fig. 1] La figure 1 est un exemple de structure de tuyère.
[Fig. 2] La figure 2 est une vue détaillée schématisant la disposition de raidisseurs de la tuyère.
[Fig. 3] La figure 3 représente un exemple de système d'isolation thermique.
[Fig. 4] La figure 4 représente un exemple de système d'isolation thermique.
[Fig. 5] La figure 5 illustre l'effet de la mise sous tension des éléments de maintien d'un exemple de système d'isolation thermique, et est une représentation schématique du système avant mise sous tension.
[Fig. 6] La figure 6 illustre l'effet de la mise sous tension des éléments de maintien d'un exemple de système d'isolation thermique, et représente schématiquement le système après mise sous tension des éléments de maintien.
[Fig. 7] La figure 7 représente un exemple de système d'isolation thermique.

Sur l'ensemble des figures, les éléments en commun sont repérés par des références numériques identiques.

### Description des modes de réalisation

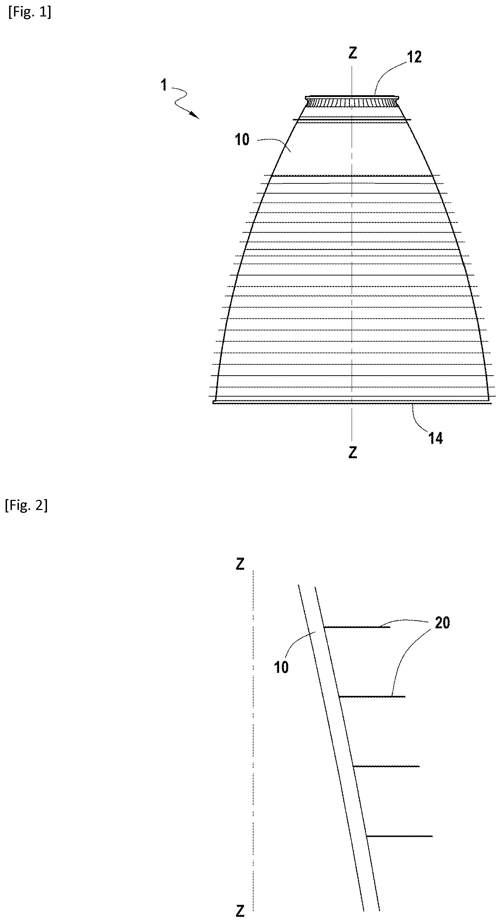

La figure 1 présente un exemple de structure de tuyère 1.

La tuyère 1 telle que présentée comprend un corps de tuyère 10 présentant une forme générale de tronc de cône autour d'un axe principal Z-Z définissant une direction principale, avec des parois incurvées.

On définit selon l'axe principal Z-Z une hauteur de la tuyère 10, qui s'étend entre une extrémité proximale 12 typiquement solidaire d'un moteur de lanceur spatial, et une extrémité distale 14, typiquement libre, les désignations « proximale » et « distale » étant ici arbitraires.

Le corps de tuyère 10 est muni d'une pluralité de raidisseurs 20. Chaque raidisseur 20 est typiquement une nervure s'étendant depuis une face externe du corps de tuyère 10, radialement par rapport à l'axe principal Z-Z.

Les raidisseurs 20 sont typiquement espacés régulièrement, et s'étendent sur tout ou partie de la hauteur de la tuyère 1, typiquement sur une hauteur comprise entre 50% et 80% de la hauteur de la tuyère 1, depuis son extrémité distale 14. La figure 2 présente un exemple de vue détaillée représentant la disposition des raidisseurs 20.

Les raidisseurs 20 présentent typiquement une dimension comprise entre 30 et 60 mm mesurée selon une direction radiale par rapport à l'axe principal Z-Z.

Les raidisseurs 20 sont typiquement espacés d'une distance comprise entre 30 et 100 mm mesurée selon la direction définie par l'axe principal Z-Z.

Afin de réaliser une isolation thermique de la tuyère 1, on dispose un système d'isolation thermique autour du corps de tuyère 10, sur tout ou partie de sa hauteur.

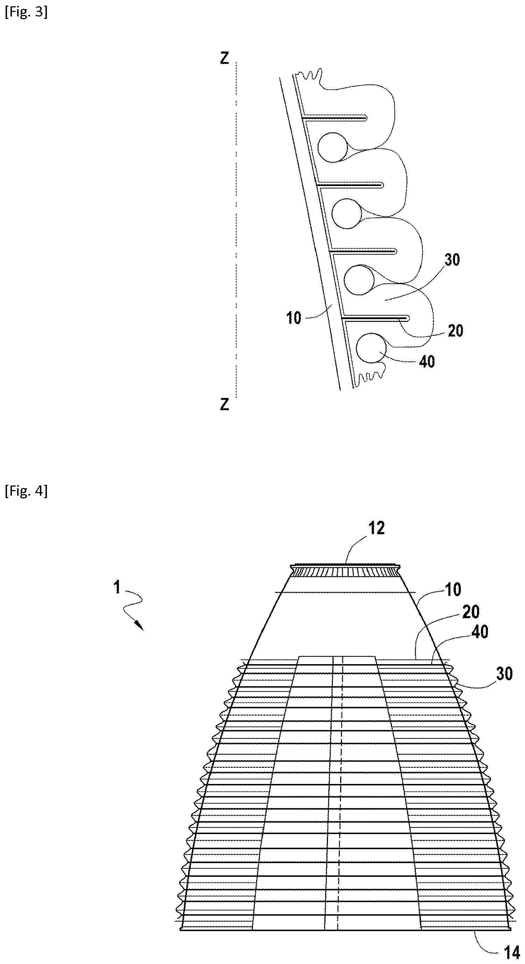

Les figures 3 et 4 représentent un exemple de système d'isolation thermique. On a ici positionné autour d'une portion du corps de tuyère 10 comprenant les raidisseurs 20 une bande de matériau isolant 30 et une pluralité d'éléments de maintien 40.

La bande de matériau isolant 30 est dimensionnée de manière à recouvrir au moins deux raidisseurs 20 successifs. Dans l'exemple illustré, on a positionné deux bandes de matériau isolant 30 qui s'étendent chacune sur toute la hauteur du corps de tuyère 10 comprenant les raidisseurs 20, mais ne couvrant qu'une partie de la circonférence du corps de tuyère 10.

Selon un exemple, le système d'isolation thermique comprend une ou plusieurs bandes de matériau isolant 30 formant des lés qui sont positionnés bout à bout ou de manière à se chevaucher à leur jonction de manière à recouvrir l'ensemble des raidisseurs 20. Chaque bande de matériau isolant 30 présente typiquement une dimension suffisante de manière à pouvoir faire un tour complet autour du corps de tuyère 10. Les deux extrémités de la bande de matériau isolant 30 se chevauchent alors typiquement sur une largeur définie, typiquement comprise entre 30 et 100 mm de manière à assurer une continuité de la protection thermique. En variante, les bandes de matériau isolant 30 peuvent être dimensionnées de manière à ne recouvrir qu'une portion de la périphérie externe du corps de tuyère 10. Il est ainsi nécessaire de positionner plusieurs bandes de matériau isolant 30 afin de couvrir toute la circonférence du corps de tuyère 10. Les bandes de matériau isolant 30 sont alors positionnées de manière à ce que leurs extrémités adjacentes se chevauchent sur une largeur définie, typiquement comprise entre 30 et 100 mm de manière à assurer une continuité de la protection thermique. Plus généralement, les bandes de matériau isolant 30 peuvent se chevaucher selon la direction définie par l'axe principal Z-Z, et/ou selon la circonférence du corps de tuyère 10.

Les bandes de matériau isolant 30 employées pour envelopper le corps de tuyère 10 peuvent être identiques ou distinctes, notamment en termes de dimension. A titre d'exemple les bandes de matériau isolant 30 peuvent être composées d'une enveloppe en fibres d'alumine, silice et oxyde de bore, par exemple en fibres d'un matériau commercialisé sous la dénomination « Nextel ^{®} » (marque déposée), l'enveloppe étant remplie d'un matériau isolant en laine polycristalline, par exemple un matériau commercialisé sous la dénomination « Fibermax ^{®} » (marque déposée). Les bandes de matériau isolant 30 sont des éléments souples, pouvant ainsi être positionnés librement autour du corps de tuyère 10, indépendamment de la section de la tuyère et de l'agencement des raidisseurs 20.

On positionne ensuite des éléments de maintien 40 autour du corps de tuyère 10. Chaque élément de maintien 40 est positionné entre deux raidisseurs 20 successifs. Les éléments de maintien 40 sont typiquement des moyens élastiques, des moyens présentant une fonction élastique ou de mise sous tension, ou des sangles couplés à un système de mise en tension. Selon un exemple, chaque élément de maintien 40 comprend un câble métallique typiquement entouré d'un isolant thermique et un système de mise en tension tel qu'un ridoir. A titre d'exemple, un élément de maintien 40 peut être composé d'un câble en acier ou en matériau commercialisé sous la désignation « Inconel ^{®} » (marque déposée), le câble étant typiquement entouré d'un isolant thermique par exemple réalisé en matériau commercialisé sous la dénomination « Fibermax ^{®} » (marque déposée) entouré d'une enveloppe en matériau commercialisé sous la dénomination « Nextel ^{®} » (marque déposée), ou réalisé par une ou plusieurs couches de matériau commercialisé sous la dénomination « Nextel ^{®} » (marque déposée). Le câble peut également être réalisé en matériau commercialisé sous la dénomination « Fibermax ^{®} » (marque déposée), en fibres de verre entourées d'un isolant thermique, ou en fibres de carbone.

La mise en tension de chaque élément de maintien 40 va venir enserrer la bande de matériau isolant 30 qui se trouve ainsi enserrée entre le corps de tuyère 10 d'une part et l'élément de maintien 40 d'autre part. Cette mise en tension vient ainsi loger les éléments de maintien dans les intervalles entre deux raidisseurs 20 successifs, ainsi que la bande de matériau isolant 30. La mise en tension des différents éléments de maintien 40 vient ainsi sensiblement déformer et conformer la bande de matériau isolant 30 à la géométrie du corps de tuyère 10, incluant les raidisseurs 20, et permet d'obtenir une couche isolante continue et stable autour du corps de tuyère 10.

Selon un exemple, on positionne un élément de maintien 40 dans chaque intervalle entre deux raidisseurs 20 successifs, comme représenté par exemple sur la figure 4.

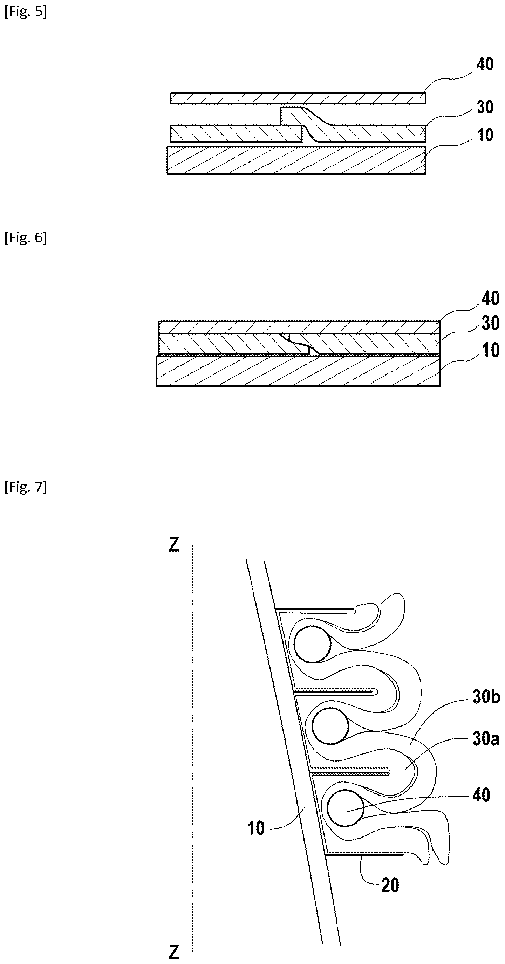

Les figures 5 et 6 illustrent l'effet de la mise en tension des éléments de maintien 40 sur une portion de recouvrement d'une bande de matériau isolant 30. Comme indiqué précédemment, les bandes de matériau isolant 30 disposées autour du corps de tuyère 10 sont typiquement dimensionnées de manière à ce que leurs extrémités se recouvrent sur une largeur définie. Cela est représenté schématiquement sur la figure 5. Lorsque l'élément de maintien 40 est mis en tension, il vient alors comprimer la bande de matériau isolant 30, et en particulier les portions se chevauchant, pour obtenir une épaisseur sensiblement uniforme, comme représenté schématiquement sur la figure 6.

La figure 7 représente un exemple de réalisation dans lequel deux bandes de matériau isolant 30 sont superposées. On les désigne respectivement par 30a et 30b pour désigner respectivement la bande de matériau isolant au contact du corps de tuyère 10, et la bande de matériau isolant le plus à l'extérieur.

La mise en tension des éléments de maintien 40 vient conformer les différentes bandes de matériau isolant 30a et 30b sur la surface externe du corps de tuyère 10, y compris sur les raidisseurs 20.

En fonctionnement, l'air éventuellement présent entre le divergent 10 et l'isolant 30a et entre les différentes bandes de matériau isolant 30 va typiquement s'échapper au niveau de la portion de recouvrement des extrémités des bandes de matériau isolant représentées schématiquement sur les figures 5 et 6.

On comprend que cet exemple de réalisation n'est pas limitatif, et que l'on peut ainsi superposer un nombre quelconque de bandes de matériau isolant 30 afin d'obtenir les propriétés souhaitées, le fonctionnement demeurant inchangé. L'utilisation de plusieurs bandes de matériau isolant 30 superposées permet notamment d'utiliser des bandes de matériau isolant 30 ayant des propriétés distinctes, notamment en termes d'épaisseur et de propriétés thermiques et/ou mécaniques.

Le système d'isolation thermique proposé est avantageux notamment pour les raisons suivantes.

II présente une bonne tenue à l'onde de souffle résultant de l'allumage des propulseurs d'appoint de l'engin spatial et également aux vibrations de la tuyère 1. Les bandes de matériau isolant 30 s'appuient en effet sur toute leur surface contre la paroi externe du corps de tuyère 10 qui est rigide. Il présente également une bonne tenue à la dépressurisation externe, car l'air présent entre le corps de tuyère 10 et les bandes de matériau isolant 30 ou entre les différentes bandes de matériau isolant 30 peut s'échapper au niveau des zones de recouvrement des bandes de matériau isolant 30.

Le système d'isolation thermique est également avantageux en termes de mise en place, car il ne nécessite pas de modifications structurelles de la tuyère 1, et requiert uniquement l'ajout de bandes de matériau isolant et d'élément de mise sous tension. Sa masse et son coût sont également faibles. De plus, les différents éléments du système d'isolation thermique proposé ne sont pas soumis à des sollicitations mécaniques lors du fonctionnement, ce qui assure la fiabilité du système d'isolation thermique. Par ailleurs, contrairement aux dispositifs connus qui emploient des éléments isolant rigides, les bandes de matériau isolant 30 ne requièrent pas de dimensionnement spécifique pour s'adapter à la géométrie de la tuyère 1. Les bandes de matériau isolant 30 sont souples, et peuvent être positionnées librement autour du corps de tuyère 10, la conformation à la géométrie de la tuyère 1 étant assurée lors du serrage des éléments de maintien 40.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Tuyère (1) d'un moteur d'engin spatial, comprenant un corps de tuyère (10) s'étendant selon une direction principale (Z-Z), depuis une extrémité proximale (12) solidaire du moteur de l'engin spatial, et une extrémité distale (14) libre,
ledit corps de tuyère (10) présentant une pluralité de raidisseurs (20) s'étendant depuis une surface externe du corps de tuyère (10), radialement par rapport à la direction principale (Z-Z),
ladite tuyère (1) comprenant un système d'isolation thermique, comprenant au moins une bande de matériau isolant (30) souple disposée de manière à entourer la surface externe du corps de tuyère (10) sur au moins une partie de la hauteur dudit corps de tuyère (10), la hauteur étant mesurée selon la direction principale (Z-Z), ledit système d'isolation thermique comprenant une pluralité d'éléments de maintien (40), chaque élément de maintien (40) étant disposé entre deux raidisseurs (20) du corps de tuyère (10) et positionné de manière à entourer lesdites bandes de matériau isolant (30) et de manière à conformer les bandes de matériau isolant (30) sur la surface externe du corps de tuyère (10) et sur les raidisseurs (20) .

2. Tuyère (1) selon la revendication 1, dans laquelle chaque élément de maintien (40) comprend un câble associé à un système de mise en tension.

3. Tuyère (1) selon la revendication 2, dans laquelle chaque élément de maintien (40) comprend un revêtement réalisé en isolant thermique.

4. Tuyère (1) selon l'une des revendications 2 ou 3, dans laquelle le système de mise en tension est un ridoir.

5. Tuyère (1) selon l'une des revendications 1 à 4, dans laquelle un élément de maintien (40) est disposé dans chaque intervalle entre deux raidisseurs (20).

6. Tuyère (1) selon l'une des revendications 1 à 5, dans laquelle le système d'isolation thermique comprend au moins deux bandes de matériau isolant (30) superposées.

7. Tuyère (1) selon l'une des revendications 1 à 6, dans laquelle le système d'isolation thermique comprend une pluralité de bandes de matériau isolant (30), chaque bande de matériau isolant (30) étant positionnée de manière à recouvrir au moins partiellement les bandes de matériau isolant (30) adjacentes.

8. Engin spatial comprenant une tuyère (1) selon l'une des revendications précédentes.

## Patentansprüche

1. Düse (1) eines Raumfahrzeugtriebwerks, umfassend einen Düsenkörper (10), der sich entlang einer Hauptrichtung (Z-Z) von einem proximalen Ende (12), das einstückig mit dem Triebwerk des Raumfahrzeugs ist, und einem freien distalen Ende (14) erstreckt,
wobei der Düsenkörper (10) mehrere Versteifungen (20) aufweist, die sich von einer Außenfläche des Düsenkörpers (10) radial in Bezug auf die Hauptrichtung (Z-Z) erstrecken,
wobei die Düse (1) ein thermisches Isolationssystem umfasst, das mindestens einen Streifen aus flexiblem Isoliermaterial (30) umfasst, der so angeordnet ist, dass er die Außenfläche des Düsenkörpers (10) über zumindest einen Teil der Höhe des Düsenkörpers (10) umgibt, wobei die Höhe entlang der Hauptrichtung (Z-Z) gemessen wird, wobei das thermische Isolationssystem mehrere Halteelemente (40) umfasst, wobei jedes Halteelement (40) zwischen zwei Versteifungen (20) des Düsenkörpers (10) angeordnet und so positioniert ist, dass es die Streifen aus Isoliermaterial (30) umgibt und dass es die Streifen aus Isoliermaterial (30) an die Außenfläche des Düsenkörpers (10) und an die Versteifungen (20) anpasst.

2. Düse (1) nach Anspruch 1, wobei jedes Halteelement (40) ein Kabel umfasst, das mit einem Spannsystem verbunden ist.

3. Düse (1) nach Anspruch 2, wobei jedes Halteelement (40) eine Abdeckung umfasst, die aus thermischer Isolierung umgesetzt ist.

4. Düse (1) nach einem der Ansprüche 2 oder 3, wobei das Spannsystem ein Spannschloss ist.

5. Düse (1) nach einem der Ansprüche 1 bis 4, wobei ein Halteelement (40) in jedem Abstand zwischen zwei Versteifungen (20) angeordnet ist.

6. Düse (1) nach einem der Ansprüche 1 bis 5, wobei das thermische Isolationssystem zumindest zwei übereinanderliegende Streifen aus Isoliermaterial (30) umfasst.

7. Düse (1) nach einem der Ansprüche 1 bis 6, wobei das thermische Isolationssystem mehrere Streifen aus Isoliermaterial (30) umfasst, wobei jeder Streifen aus Isoliermaterial (30) so positioniert ist, dass er die benachbarten Streifen aus Isoliermaterial (30) zumindest teilweise abdeckt.

8. Raumfahrzeug, umfassend eine Düse (1) nach einem der vorhergehenden Ansprüche.

## Claims

1. A nozzle (1) of a spacecraft engine, comprising a nozzle body (10) extending along a main direction (Z-Z), from a proximal end (12) secured to the engine of the spacecraft, and a free distal end (14),
said nozzle body (10) having a plurality of stiffeners (20) extending from an outer surface of the nozzle body (10), radially with respect to the main direction (Z-Z),
said nozzle (1) comprising a thermal insulation system, comprising at least one strip of flexible insulating material (30) disposed so as to surround the outer surface of the nozzle body (10) over at least part of the height of said nozzle body (10), the height being measured along the main direction (Z-Z), said thermal insulation system comprising a plurality of holding elements (40), each holding element (40) being disposed between two stiffeners (20) of the nozzle body (10) and positioned so as to surround said strips of insulating material (30) and so as to conform the strips of insulating material (30) on the outer surface of the nozzle body (10) and on the stiffeners (20).

2. The nozzle (1) according to claim 1, wherein each holding element (40) comprises a cable associated with a tensioning system.

3. The nozzle (1) according to claim 2, wherein each holding element (40) comprises a coating made of thermal insulator.

4. The nozzle (1) according to any of claims 2 or 3, wherein the tensioning system is a turnbuckle.

5. The nozzle (1) according to any of claims 1 to 4, wherein a holding element (40) is disposed in each interval between two stiffeners (20).

6. The nozzle (1) according to any of claims 1 to 5, wherein the thermal insulation system comprises at least two superimposed strips of insulating material (30).

7. The nozzle (1) according to any of claims 1 to 6, wherein the thermal insulation system comprises a plurality of strips of insulating material (30), each strip of insulating material (30) being positioned so as to at least partially cover the adjacent strips of insulating material (30).

8. A spacecraft comprising a nozzle (1) according to any of the preceding claims.
